Europäisches Patentamt

**European Patent Office**

**Office européen des brevets**

(11) Numéro de publication: **0 342 076**
**A1**

# (12) DEMANDE DE BREVET EUROPEEN

(21) Numéro de dépôt: 89401100.6

(22) Date de dépôt: 20.04.89

(51) Int. Cl.⁴: **B 65 G 7/04**

(30) Priorité: 03.05.88 FR 8805899

(43) Date de publication de la demande:
**15.11.89 Bulletin 89/46**

(84) Etats contractants désignés:
**BE CH DE ES GB IT LI NL SE**

(71) Demandeur: **Mille, Daniel**
**29 Boulevard de la République**
**F-91450 Soisy/s/Seine (FR)**

(72) Inventeur: **Mille, Daniel**
**29 Boulevard de la République**
**F-91450 Soisy/s/Seine (FR)**

(74) Mandataire: **Cuer, André**
**CABINET CUER 30, rue de Léningrad**
**F-75008 Paris (FR)**

(54) **Système de transport pour une construction modulaire.**

(57) L'invention concerne un système de transport pour une construction modulaire.

Pour l'essentiel, ce système est caractérisé par le fait que la face inférieure du plancher (2) de ladite construction modulaire (1) est munie d'une pluralité de plots élastiques (3) qui peuvent être gonflés par mise en relation avec une source de fluide sous pression pour soulever du sol (4) ledit plancher (2) ; et par le fait qu'en vue du transport de ladite construction modulaire (1), il comprend une remorque (5) munie de roues (6) dont la hauteur est telle qu'elle puisse être insérée sous ledit plancher (2) lorsque lesdits plots (3) sont gonflés.

Application au déplacement des constructions modulaires à usage saisonnier.

EP 0 342 076 A1

**Description**

L'invention concerne un système de transport pour une construction modulaire du genre de celles qui sont souvent utilisées lorsqu'il s'agit de pouvoir disposer de locaux qui sont posés sur le sol, sans l'intervention de fondations, et qui sont raccordés provisoirement à des arrivées d'eau, d'électricité, et similaires. De tels modules peuvent servir à l'habitation, mais il peut aussi s'agir, en particulier, d'abris de jardin, de gîtes ruraux saisonniers, ou de locaux sanitaires saisonniers.

Ces constructions modulaires ou "modules" sont généralement munies à leur sommet d'un ou plusieurs crochets qui permettant de les poser à l'endroit voulu et de les enlever en les accrochant à un appareil de levage comme une grue montée sur un véhicule. On procède de même lorsque l'on a besoin de soulever de tels modules, par exemple pour rectifier une inclinaison au moyen de cales. Cette façon de faire oblige à faire appel à des entreprises disposant de camions-grues, ce qui est coûteux et peu commode et limite les possibilités d'utilisation de ces éléments de construction.

Aussi, le but de la présente invention est-il de proposer un module de construction qui puisse être facilement transporté, déplacé et/ou mis en place, sans qu'il soit nécessaire de faire appel à des engins de levage spécialisés.

Selon l'invention, ce but, et d'autres qui apparaîtront par la suite, sont atteints grâce à un système de transport pour une construction modulaire qui est caractérisé par le fait que la face inférieure du plancher de la construction modulaire est munie d'une pluralité de plots élastiques qui peuvent être gonflés par mise en relation avec une source de fluide sous pression pour soulever le plancher du sol ; et par le fait qu'en vue du transport du module en question, il comprend une remorque munie de roues dont la hauteur est telle qu'elle puisse être insérée sous le plancher du module lorsque les plots de ce dernier sont gonflés.

On comprend que la première de ces dispositions permet de soulever aisément et à moindres frais le module en question, et de le mettre à niveau horizontal quelle que soit la déclivité du sol, à condition toutefois qu'elle soit inférieure à 15°, sans qu'il soit nécessaire de faire appel à des cales.

D'autre part, pour déplacer le module, et grâce à la seconde disposition spécifiée ci-avant, il suffit de gonfler ses plots, ce qui élève son plancher au-dessus du niveau supérieur de la remorque, de pousser cette dernière sous son plancher et de dégonfler ses plots pour qu'il repose sur la remorque. On peut alors accrocher celle-ci à un véhicule quelconque muni d'un crochet de traction et déplacer à volonté l'ensemble formé par le module et sa remorque porteuse, les plots étant rétractés de la manière qui sera décrite plus loin pour ne pas gêner le transport.

D'autre part, il est avantageux que la face inférieure du plancher du module selon l'invention, ainsi que la face supérieure de la remorque spécifiée ci-avant comportent des moyens de guidage réciproque qui, d'une part, facilitent l'introduction de la remorque sous le plancher du module et, d'autre part, servent à les solidariser dans le sens transversal, ce qui évite tout risque de glissement latéral.

De préférence, ces moyens de guidage réciproque sont constitués par au moins une glissière ou une rainure en creux qui est ménagée dans la face inférieure du plancher du module et qui coopère avec un longeron de sa remorque de transport, ce qui permet de réaliser ces moyens de guidage de manière simple et peu coûteuse.

En fait, cette remorque peut être formée de deux de ces longerons reliés par des traverses et montés sur des roues, le plancher du module comportant alors deux glissières de forme correspondante, ce qui conduit à un dispositif remarquablement rustique, mais néanmois fiable, et dont le coût est faible.

Avantageusement, la source de gaz sous pression qui permet de gonfler les plots du module selon l'invention est une bouteille de gaz comprimé de type classique solidaire de la remorque spécifiée ci-avant, ce qui constitue une solution économique et commode, compte tenu des facilités d'approvisionnement.

On peut toutefois utiliser également un compresseur solidaire de la remorque et associé à un réservoir d'air comprimé, ce qui permet une plus grande autonomie, par exemple dans le cas d'une utilisation intensive de la remorque.

D'autre part, selon une forme de réalisation avantageuse, le plancher du module selon l'invention présente une forme générale rectangulaire et comporte quatre plots gonflables disposés sensiblement à ses quatre coins, cette conformation parfaitement symétrique étant adaptable à une grande majorité de constructions modulaires de tous genres.

En ce qui concerne enfin le plancher de la remorque, il comporte avantageusement dans sa partie supérieure des dalles amovibles d'alimentation et/ou d'évacuation des fluides et utilités, ainsi que des cavités de liaison pour le passage de câbles ou de tuyaux.

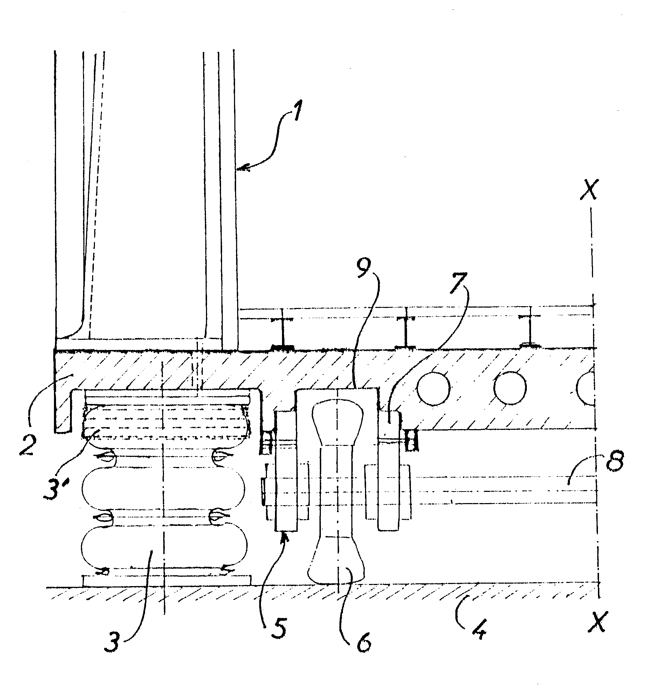

La description qui va suivre, et qui ne présente aucun caractère limitatif, permettra de bien comprendre comment la présente invention peut être mise en pratique. Elle doit être lue en regard du dessin annexé, dont la figure unique représente une vue en coupe verticale partielle du module de construction selon l'invention.

Cette figure montre seulement une moitié du module en question qui est désigné dans son ensemble par le repère 1 et qui est symétrique par rapport à un plan vertical médian dont la trace sur le plan du dessin est la ligne X-X. En d'autres termes, on obtient une vue en coupe complète du dispositif en complétant cette représentation par symétrie par rapport à cette ligne X-X.

Le module 1 comporte un plancher 2 dont la forme en plan est généralement rectangulaire et qui comporte à chacun des quatre coins de sa face inférieure un plot gonflable 3 destiné en particulier à faciliter son transport.

Plus précisément, ces plots 3 sont des vérins souples constitués par une paroi extérieure d'étanchéité en gomme renforcée d'une armature en nylon®. Ils présentent la forme générale d'un cylindre et ils sont maintenus par endroits par un ou plusieurs anneaux métalliques.

Les plots 3 sont munis chacun d'un embout non représenté, analogue à la valve d'un pneu de véhicule, et pouvant être raccordé par un réseau de tuyaux souples noyés dans le plancher 2 à un réservoir de gaz sous pression qui peut être tout simplement une bouteille de gaz comprimé ou qui peut être alimenté par un compresseur.

Lorsque ce raccordement est effectué, il suffit d'ouvrir le robinet de ce réservoir de gaz pour que le gonflage du plot 3 ait lieu à l'encontre de la valve de son embout et soulève le plancher 2 du sol 4. On arrête cette opération en fermant le robinet lorsque le haut du plot 3, et donc le bas du plancher 2, ont atteint une position légèrement supérieure à celle représentée sur la figure, cependant que la valve de l'embout empêche l'air ou le gaz de sortir du plot 3 et bloque donc le système en position. Le gonflage des quatre plots 3 aux quatre coins du module 1 a lieu simultanément ou successivement, et il est conduit de telle manière que, dans sa position finale, le plancher 2 soit sensiblement parallèle au sol 4.

On amène alors sous ce plancher 2 une remorque 5 montée sur des roues 6 et constituée par des longerons 7 reliés par des traverses 8, la hauteur à laquelle le plancher 2 a été amenée étant bien entendu telle que cette opération puisse être réalisée sans difficultés.

En outre, la base du plancher 2 présente avantageusement des glissières 9 dont la forme correspond en creux à celle des longerons 7 de la remorque 5, ce qui fournit un guidage et un moyen de maintien transversal pour la remorque 5 par rapport au plancher 2. De préférence, ce dernier comporte des glissières 9 aussi bien dans son sens longitudinal que dans son sens transversal, ce qui permet de présenter la remorque 5 sur l'un quelconque de ses quatre côtés, et la manoeuvre d'introduction peut être facilitée par un élargissement ou une rampe ménagée à l'extrémité des glissières 9.

Lorsque l'on dégonfle les plots 3 en agissant sur les valves de leurs embouts, le plancher 2 et le module 1 viennent reposer sur la remorque 5, dans la position représentée sur la figure.

Les plots 3 se rétractent et prennent la position qui est indiquée en traits interrompus sur cette même figure, et dans laquelle leur base est située au-dessus du sol. Cette rétractation peut se faire au moyen d'une vanne à trois voies à commande manuelle interposée entre le plot et le réservoir de fluide sous pression qui l'alimente. Par échappement du gaz du réservoir, il se produit un effet de venturi bien connu qui provoque une dépression dans le plot, et donc sa rétractation. Il serait également possible de monter des ressorts de rappel entre la plaque de portée au sol du plot 3 et le plancher 2.

On peut alors déplacer la remorque 5 avec le module 1 qu'elle supporte, par exemple en l'accrochant à un véhicule quelconque équipé d'un crochet de traction, sans que les plots 3 gênent le transport en quoi que ce soit.

Lorsque l'ensemble est arrivé à destination, il suffit de répéter la même opération de soulèvement du plancher 2 par gonflement des plots 3 pour pouvoir déposer à l'endroit choisi le module 1 qui repose alors sur les plots 3 et dégager d'en-dessous le plancher 2 la remorque 5 qui devient disponible pour d'autres transports. Le dégonflage des plots 3 permet enfin au plancher 2 de reposer sur le sol 4 avec interposition de cales ou d'autres organes appropriés, tels que des cris à vis classiques, mais il est également possible de ne pas dégonfler les plots 3, auquel cas le module repose sur ces derniers.

Il faut d'ailleurs noter ici à ce sujet que les plots 3 viennent d'être décrits en vue de leur utilisation pour le transport du module 1, mais, bien entendu, on pourrait également les employer à d'autres fins, et, en particulier, pour déployer des cris de calage dans le cas où le stationnement du module serait prévu pour une longue durée. Dans cette hypothèse, on commencerait par mettre le module à niveau par ses plots gonflables 3, on le mettrait ensuite à niveau au moyen des crics, et on enlèverait enfin les plots 3 ou on les rétracterait. Pour l'enlèvement du module, les mêmes opérations se feraient en sens inverse.

En ce qui concerne enfin le plancher 2, il faut noter enfin qu'il peut comporter dans sa partie supérieure des dalles amovibles permettant l'arrivée ou l'évacuation de tout fluide ou utilité nécessaire à l'utilisation du module au moyen de tuyaux ou de câbles souples.

En ce qui concerne la conception de sa forme, ce plancher 2 peut comporter des cavités de liaison permettant le passage de ces câbles ou tuyaux vers l'extérieur, ou vers un module voisin, ou vers la source des utilités, comme l'électricité ou le téléphone, ou encore vers le réceptacle destiné aux eaux usées.

## Revendications

1. Système de transport pour une construction modulaire, caractérisé par la combinaison d'une pluralité de plots élastiques connus en eux-mêmes (3) qui sont fixés sur la face inférieure du plancher (2) de ladite construction modulaire (1) et qui peuvent être gonflés par mise en relation avec une source de fluide sous pression pour soulever du sol (4) ledit plancher (2), et d'une remorque (5) munie de roues (6) qui est destinée au transport de ladite construction modulaire (1) et dont la hauteur est telle qu'elle puisse être insérée sous ledit plancher (2) lorsque lesdits plots (3) sont gonflés.

2. Système de transport selon la revendication 1, caractérisé par le fait que la face intérieure dudit plancher (2) et la face supérieure de ladite remorque (5) comportent des moyens de guidage réciproque.

3. Système de transport selon la revendication 2, caractérisé par le fait que lesdits moyens de guidage réciproque sont constitués par au moins une glissière (9) qui est ménagée dans la face inférieure dudit plancher (2) et qui coopère avec un longeron (7) de ladite remorque (5).

4. Système de transport selon la revendication 3, caractérisé par le fait que ladite remorque (5) est formée de deux desdits longerons (7) reliés par des traverses (8) et montés sur des roues (6), le plancher (2) du module (1) comportant au moins deux rainures en creux (9) dont la forme correspond à celle des longerons (7).

5. Système de transport selon la revendication 4, caractérisé par le fait que ledit plancher (2) comporte deux paires orthogonales desdites rainures en creux (9).

6. Système de transport selon l'une quelconque des revendications 1 à 5, caractérisé par le fait que ladite source de gaz sous pression est une bouteille de gaz comprimé.

7. Système de transport selon l'une quelconque des revendications 1 à 5, caractérisé par le fait que ladite source de gaz sous pression est un compresseur solidaire de ladite remorque (5) et associé à un réservoir d'air comprimé.

8. Système de transport selon l'une quelconque des revendications 1 à 7, caractérisé par le fait que ledit plancher (2) présente une forme générale rectangulaire et comporte quatre desdits plots gonflables (3) disposés sensiblement à ses quatre coins.

9. Système de transport selon l'une quelconque des revendications 1 à 8, caractérisé par le fait que ledit plancher (2) comporte dans sa partie supérieure des dalles amovibles d'alimentation et/ou d'évacuation des fluides et des utilités, ainsi que des cavités de liaison pour le passage de câbles ou de tuyaux.

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| X | FR-A-2 550 262 (J. COUEGNAS)<br>* Page 4, ligne 35 - page 5, ligne 5; figures * | 1,6,8 | B 65 G 7/04 |
| A | | 9 | |
| | --- | | |
| X | DE-B-1 106 691 (DEUTSCHE BUNDESBAHN)<br>* Revendications 1,2,3; colonne 2, ligne 39 - colonne 3, ligne 44 * | 1 | |
| | --- | | |
| A | FR-A-2 259 779 (SALEN INTERDEVELOP)<br>* Page 4, lignes 9-18; page 6, lignes 33-38 * | 2,3,4 | |
| | ----- | | |

DOMAINES TECHNIQUES
RECHERCHES (Int. Cl.4)

B 65 G
E 04 G
E 04 B
B 65 D

Le présent rapport a été établi pour toutes les revendications

| Lieu de la recherche | Date d'achèvement de la recherche | Examinateur |
|---|---|---|
| LA HAYE | 07-08-1989 | VAN ROLLEGHEM F.M. |